Europäisches Patentamt

(19) European Patent Office

Office européen des brevets

(11) Publication number: **0 219 471 B1**

## (12) EUROPEAN PATENT SPECIFICATION

(45) Date of publication of the patent specification:
**13.12.89**

(21) Application number: **86850238.6**

(22) Date of filing: **30.06.86**

(51) Int. Cl.⁴: **B01F 7/04, B01F 15/02**

(54) **An arrangement in a mixing machine.**

(30) Priority: **03.07.85 NO 852667**

(43) Date of publication of application:
**22.04.87 Bulletin 87/17**

(45) Publication of the grant of the patent:
**13.12.89 Bulletin 89/50**

(84) Designated Contracting States:
**AT BE CH DE FR GB IT LI LU NL SE**

(56) References cited:
**EP-A- 0 052 518**
**DE-A- 1 097 411**
**US-A- 2 861 786**
**US-A- 3 800 474**
**US-A- 4 193 700**

(73) Proprietor: **Forberg, Halvor, Hagabakken 2 Hegdal,
N-3250 Larvik(NO)**

(72) Inventor: **Forberg, Halvor, Hagabakken 2 Hegdal,
N-3250 Larvik(NO)**

(74) Representative: **Westerlund, Christer et al, L.A. Groth &
Co Patentbyra AB Västmannagatan43,
S-113 25 Stockholm(SE)**

## Description

The present invention relates to a mixing apparatus for mixing particulate material with especially adhesive liquids.

When especially adhesive liquids are added to particles during a mixing operation it is essential to avoid that the additive impinges directly on the walls of the apparatus or on the mixing means, respectively. In order to avoid this, it is known, e.g. from mixing apparatus comprising two horizontal vanes rotating in opposite directions, to design the vanes in such a manner and to rotate them with such a peripheral velocity that the mixed material is thrown upwards to form a floating fog or curtain, to which the liquid additive is added, being ejected from a nozzle. As regards the intended mixture of particles, however, the high peripheral velocity necessary to achieve said floating curtain effect will be opposed to the requirements as regards intimate mixing which is achieved with lower peripheral velocities. In mixing machines of this kind it is deemed advantageous that the peripheral velocity of the vanes be in a range causing a floating mixing zone above and between the vanes rotating in opposite directions, i.e. an approximately weightless zone where the particles may move freely in relation to each other during the mixing operation. The peripheral velocity necessary to achieve said suitable mixing effect is necessarily lower than the peripheral velocity required to achieve free throwing of particles to form a floating fog or curtain into which the additive can be injected.

There is, thus a demand for a mixing apparatus, wherein said desired floating mixing zone may be achieved at the same time as the liquid additive may be added in a suitable manner, i.e. by utilizing the above mentioned floating curtain technique.

According to the invention a mixing apparatus for mixing particulate materials with especially adhesive liquids is proposed, said apparatus comprising a mixture chamber with rotatable mixing vanes inside said chamber, nozzles outside the chamber for supplying the adhesive liquids further comprising means for producing a fog or curtain of particles between said vanes and said nozzles, the apparatus being characterized in that said means is a rotatable throwing roller in contact with the surface of the mass to be mixed in the mixing chamber.

The invention is especially suited for a mixing apparatus comprising two horizontal vanes rotating in opposite directions, and in such a mixing apparatus it is advantageous according to the present invention to arrange said rotatable throwing roller above said vanes and between their axes of rotation.

The advantage according to present invention is achieved by the mixing apparatus being operable under conditions resulting in the intended intimate mixture at the same time as the desired particle fog is achieved into which the additive may be injected.

Examples of mixing apparatus where the vanes rotate so rapidly that a floating fog of particles is thrown upwards are known from the DE-B 1 097 411, 1 112 968, and 1 116 196. An example of a mixing apparatus by the aid of which a desired very intimate mixture is achieved by providing a floating mixing zone is known from NO-C 149 684.

The invention is disclosed in more detail below with reference to the drawing, where

Figure 1 is a diagrammatical cross section of a mixing apparatus comprising two parallel vanes, and

Figure 2 is a side elevation of the apparatus according to Figure 1.

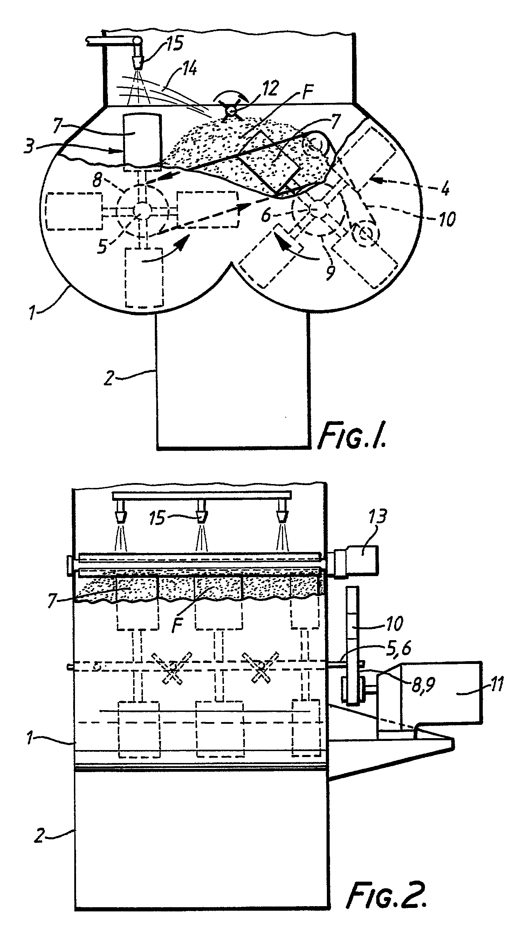

The mixing apparatus diagrammatically shown in the figures comprises a mixing chamber 1, that is mounted on a basis 2. In mixing chamber 1 two parallel mixing vanes 3, 4 are provided. Each vane, in a known manner, comprises a horizontal shaft 5 and 6, respectively, that is rotatably mounted on bearings (not shown) in the end walls of said mixing chamber. Each shaft 5, 6 carries a number of blades 7. As shown in Figure 2, both shafts 5, 6 project on one end of the mixing chamber 1 and are at that end connected to driving wheels 8, 9, respectively. Said driving wheels are driven by a chain 10 which is, in turn, driven by a motor 11. The vanes 3 and 4 can, thus, by the aid of motor 11, be driven in opposite directions, as indicated by the arrows in Figure 1.

Said vanes rotate with a velocity resulting in a floating mixing zone F in the area above and between the rotating shafts 5, 6, as shown in Figure 1.

In said mixing apparatus a throwing roller 12 is rotatably mounted in both end walls of said mixing chamber. It is rotatably mounted in said end walls in a manner not shown and is connected to a suitable driving motor 13. Said throwing roller 12 can be shaped in many different ways, but the roller diagrammatically shown is shaped like a shaft having four radially projecting impellers extending along the entire length of said shaft inside said mixing chamber 1. By the aid of motor 13 said throwing roller 12 can rotate as indicated by the arrow. Said throwing roller 12 is provided so as to achieve contact with the particles during mixing operations in zone F. Due to the rotation of throwing roller it will throw a particle fog 14 upwards. Into said particle fog the desired additive is injected by nozzles 15.

Said throwing roller 12 may be mounted in the end walls of the mixing chamber so as to be adjustable up- and downwards as desired. This is not shown, since it is a structural detail easily accomplished by those skilled in the art.

The suitable peripheral velocity of blades 7 in a typical mixing apparatus, of the shown kind, will be in the range of 1.2 – 1.7 m/sec., whereas said throwing roller rotates with a velocity of approximately 1500 rpm/min., depending on the roller diameter.

The particle fog formed will be a fog or a curtain where the injected liquid particles will penetrate and be covered, so that adhesion on apparatus parts is avoided.

## Claims

1. A mixing apparatus for mixing particulate material with especially adhesive liquids comprising a mixture chamber (1) with rotatable mixing vanes (3, 4) inside said chamber, nozzles (15) outside the chamber for supplying the adhesive liquids further comprising means for producing a fog or curtain of particles (14) between said vanes and said nozzles, characterized in that said means is a rotatable throwing roller (12) in contact with the surface of the mass to be mixed in the mixing chamber.

2. A mixing apparatus as defined in claim 1, characterized in that said rotatable throwing roller (12) is arranged above said vanes (3, 4) and between their axes of rotation.

**Patentansprüche**

1. Mischmaschine zur Mischung eines aus Partikeln bestehenden Materials mit insbesondere Leimlösungen, umfassend eine Mischkammer (1) mit darin vorgesehenen rotierbaren Mischflügeln (3, 4), ausserhalb der Kammer zur Zuführung der Leimlösung vorgesehene Düsen (15), sowie eine Vorrichtung zur Herstellung einer Vernebelung oder eines Vorhangs von Partikeln (14) zwischen den Flügeln und den Düsen, dadurch gekennzeichnet, dass die Vorrichtung eine rotierbare Wurfrolle (12) ist, die mit der Oberfläche der zu behandelnden Masse in der Mischkammer Kontakt hat.

2. Mischmaschine nach Anspruch 1, dadurch gekennzeichnet, dass die rotierbare Wurfrolle (12) über den Flügeln (3, 4) und zwischen deren Rotationsachsen angeordnet ist.

**Revendications**

1. Appareil mélanger pour mélanger un matériau particulaire avec, en particulier, des liquides adhésifs, comprenant une chambre de mélange (1) avec des pales mélangeuses rotatives (3, 4) à l'intérieur de la chambre, et avec des buses (15) à l'extérieur de la chambre pour fournir les liquides adhésifs, et comprenant en outre un moyen pour produire un brouillard ou rideau de particules (14) entre les pales et les buses, caractérisé en ce que ce moyen est un cylindre de projection rotatif (12) en contact avec la surface de la masse à mélanger dans la chambre de mélange.

2. Appareil mélangeur selon la revendication 1, caractérisé en ce que le cylindre de projection rotatif (12) est disposé au-dessus des pales (3, 4) et entre leurs axes de rotation

*Fig.I.*

*Fig.2.*